# EUROPEAN PATENT APPLICATION

(11) **EP 3 599 508 A1**
(43) Date of publication of application: **29.01.2020**
(21) Application number: 18185885.3
(22) Date of filing: 26.07.2018
(51) Int. Cl.: G03B 15/06, H04N 5/225, H04N 5/262, A47F 7/02

(54) **WRISTWATCH ILLUMINATION UNIT**

(71) Applicant: CHRONEXT Service Germany GmbH, 50825 Köln (DE)
(72) Inventor: WURLTZER, Ludwig, 91413 Neustadt an der Aisch (DE); MÄSGEN, Malte, 50670 Köln (DE)
(74) Representative: Vossius & Partner Patentanwälte Rechtsanwälte mbB

(57) **Abstract**

The present invention relates to a wristwatch illumination unit (100) comprising an illumination chamber comprising a front wall (112, 114, 118), a rear wall (120), at least one side wall, a top wall (140) and a bottom wall (150); a wristwatch holder (160) mounted within the illumination chamber; an illumination system comprising a top illumination panel (172) proximate to the top wall of the chamber and a bottom illumination panel (174) proximate to the bottom wall of the chamber, wherein each illumination panel comprises at least one light source; and at least one light dispersive element (180).

## Description

The invention relates to a wristwatch illumination unit and a method for generating a multi-view picture of a wristwatch.

The sale and purchase of wristwatches, especially luxury wristwatches, often depends on the ability of the seller to faithfully represent the qualities and specific details of the watch being sold. As the commercial sale of wristwatches increasingly moves to online platforms, such as internet auction sites, the generation of high-quality, detailed wristwatch photos takes on increasing importance.

EP 3 243 323 A1 describes a photography system and a method for generating a multi-view picture of a wristwatch. The photography system includes a rotating unit configured to rotate around a first axis, an illumination unit, a wristwatch holder being mounted on the rotating unit, a camera unit, and a control unit. The control unit is configured to control the camera unit and the rotating unit such that a series of pictures of a wristwatch mounted on the wristwatch holder can be generated automatically, the pictures of the series of pictures showing the wristwatch in different angles with respect to the camera unit.

While the illumination unit of EP 3 243 323 A1 is generally suited for illuminating a watch being mounted on the wristwatch holder, it has turned out that properly illuminating different kinds of wristwatches so as to specifically illuminate the facets and important features of these different kinds of wristwatches is particularly challenging.

It is, accordingly, an object of the present invention to provide an improved wristwatch illumination unit which is particularly suited for adequate illumination of wristwatches and an improved method for generating a multi-view picture of a wristwatch.

This object is achieved with the features of the independent claims. Dependent claims refer to preferred embodiments.

The invention relates to a wristwatch illumination unit comprising an illumination chamber, a wristwatch holder, an illumination system, and at least one light dispersive element. The illumination chamber comprises a front wall, a rear wall, at least one side wall, a top wall, and a bottom wall. The wristwatch holder is mounted within the illumination chamber. The illumination system comprises a top illumination panel proximate to the top wall of the chamber, and a bottom illumination panel proximate to the bottom wall of the chamber. Each illumination panel comprises at least one light source. The front wall of the illumination chamber comprises an upper portion, a lower portion and an imaging through-hole positioned between the upper portion and the lower portion. The lower portion is positioned at a first angle relative to a vertical axis such that light emitted from the top illumination panel is reflected and/or scattered by said lower portion toward the wristwatch holder. The upper portion is positioned at a second angle relative to the vertical axis such that light emitted from the bottom illumination panel is reflected and/or scattered by said upper portion toward the wristwatch holder.

Preferably the upper portion and/or the lower portion of the front wall are flat and/or planar.

Preferably, the front wall, the rear wall, the at least one side wall, the top wall and the bottom wall each define an inner surface of the illumination chamber and wherein said inner surfaces are at least partially glossy and/or reflective materials and/or are preferably completely white. This allows for a homogeneous illumination due to increased scattering of light emitted from the illumination panels.

Preferably, the first angle is in the range of 40° to 85°, preferably 50° to 75°, and most preferably 60° to 65°. This arrangement of the lower portion enhances the visibility of certain features of the lower part of a mounted wristwatch due to its proper illumination.

Preferably, the second angle is in the range of 50° to 85°, preferably 60° to 80°, and most preferably 70° to 75°. This arrangement of the upper portion enhances the visibility of certain features of the upper part of a mounted wristwatch due to its proper illumination. Since the wristwatch is typically mounted in a slightly asymmetric manner, the first and second angles will typically be different.

Preferably the front wall of the illumination chamber further comprises a middle portion between the upper portion and the lower portion, the middle portion being positioned at a third angle relative to a vertical axis.

Preferably the third angle is in the range of -20° to 20°, preferably -10° to 10°, and most preferably -5° to 5°. This arrangement may be preferable for, e.g., reflecting and/or scattering light emitted from a rear illumination panel.

Preferably the illumination unit comprises a rear illumination panel proximate the rear wall of the chamber. The rear illumination panel may help in providing an adequate background illumination.

Preferably the at least one light dispersive element forms at least one part of the at least one side wall of the chamber, the rear wall of the chamber, the bottom wall of the chamber and/or the top wall of the chamber.

The at least one light dispersive element may comprise opal polycarbonate plastic or opaque acrylic Perspex.

Preferably, the at least one light dispersive element is arranged between at least one of the top illumination panel, the bottom illumination panel and the rear illumination panel and the wristwatch holder.

Preferably at least one, preferably each, of the top illumination panel, the bottom illumination panel and the rear illumination panel comprises a center portion and two side portions, the illumination of which can be controlled independently.

Preferably the illumination chamber further comprises a blocking element arranged between at least one of the top illumination panel, the bottom illumination panel and the rear illumination panel and the wristwatch holder.

The blocking element may comprise neutral white PS or white Acrylic glass.

Preferably, the blocking element comprises a first portion proximate to the top wall of the chamber, a second portion proximate to the bottom wall of the chamber, and may optionally comprise a third portion proximate to the rear wall of the chamber.

Preferably the blocking element is arranged between at least one of the top illumination panel, the bottom illumination panel and the rear illumination panel and the wristwatch holder.

Preferably the top and/or bottom illumination panels extend farther in a direction toward one of the side walls than the blocking element, wherein the blocking element is arranged between the top and/or bottom illumination panels, respectively.

The wristwatch holder may comprise an arch-shaped portion adapted for mounting a wristwatch such that the backside of the watchcase of the watch is, preferably fully, exposed.

Preferably the lower portion of the front wall is positioned at a first angle relative to a vertical axis such that light emitted from the top illumination panel is reflected and/or scattered by said lower portion toward the arch-shaped portion of the wristwatch holder. Preferably the upper portion of the front wall is positioned at a second angle relative to the vertical axis such that light emitted from the bottom illumination panel is reflected and/or scattered by said upper portion toward the arch-shaped portion of the wristwatch holder.

Preferably the illumination unit further comprises a rotating unit configured to rotate around a first axis, the wristwatch holder being mounted on the rotating unit.

Preferably the bottom wall of the chamber comprises a through-hole and wherein the wristwatch holder is mounted on the rotating unit by means of a shaft extending through the through-hole.

Preferably the wristwatch holder comprises a holding portion and the arch-shaped portion is rotatably mounted on the holding portion such that the arch-shaped portion can be rotated around a second axis being perpendicular to the first axis.

Preferably the illumination unit further comprises a control unit for controlling the illumination provided by the illumination system and/or the rotation of the wristwatch holder.

Preferably the illumination system provides illumination with a color temperature of at least 4000 K, preferably at least 4500 K, more preferably at least 5000 K.

Preferably the illumination panels of the illumination system are positioned at least 20 mm away from the at least one light dispersive element.

Preferably each illumination panel of the illumination system comprises multiple fields, each field comprising multiple light sources.

The illumination provided by each field may be individually controllable.

Optionally, each panel comprises at least 8 fields, preferably at least 12 fields and/or at least 60 LEDs, preferably at least 72 LEDs.

Preferably the top illumination panel extends farther in a direction toward the front wall than the bottom illumination panel by at least 10 mm, preferably by at least 20 mm, more preferably by at least 25 mm.

Preferably the top wall extends farther in a direction toward the front wall than the bottom wall by at least 10 mm, preferably by at least 20 mm, more preferably by at least 25 mm.

Preferably the illumination chamber further comprises a top blocking element arranged between the top illumination panel and the wristwatch holder and a bottom blocking element arranged between the bottom illumination panel and the wristwatch holder. Preferably the top blocking element extends farther in a direction toward the front wall than the bottom blocking element by at least 5 mm, preferably by at least 10 mm, more preferably by at least 15 mm.

Preferably the ratio between the unblocked area of the top illumination panel and the unblocked area of the bottom illumination panel is in the range of I to 2, preferably 1.1 to 1.5, more preferably 1.2 to 1.4.

The invention also relates to a method for generating a multi-view picture of a wristwatch. The method comprises the following steps: providing an illumination unit according to any embodiment of the invention; mounting a wristwatch on the wristwatch holder mounted on a rotating unit; rotating the rotating unit around a first axis; generating a series of pictures of the wristwatch mounted on the wristwatch holder by means of a camera unit, wherein the pictures of the series of pictures show the wristwatch at different angles with respect to the camera unit; and merging the pictures to a multi-view picture and/or movie of the wristwatch.

Further embodiments of the invention are described by the following aspects:
1. A wristwatch illumination unit comprising:
   an illumination chamber comprising a front wall, a rear wall, at least one side wall, a top wall and a bottom wall;
   a wristwatch holder mounted within the illumination chamber;
   an illumination system comprising a top illumination panel proximate to the top wall of the chamber and a bottom illumination panel proximate to the bottom wall of the chamber, wherein each illumination panel comprises at least one light source; and
   at least one light dispersive element;
   wherein the front wall of the illumination chamber comprises an upper portion, a lower portion, and an imaging through-hole positioned between the upper portion and the lower portion, the lower portion being positioned at a first angle relative to a vertical axis such that light emitted from the top illumination panel is reflected and/or scattered by said lower portion toward the wristwatch holder, and the upper portion being positioned at a second angle relative to the vertical axis such that light
   emitted from the bottom illumination panel is reflected and/or scattered by said upper portion toward the wristwatch holder.
2. The wristwatch illumination unit of aspect 1, wherein the upper portion and/or the lower portion of the front wall are flat and/or planar.
3. The wristwatch illumination unit of aspect 1 or aspect 2, wherein the front wall, the rear wall, the at least one side wall, the top wall and the bottom wall each define an inner surface of the illumination chamber and wherein said inner surfaces are at least partially neutral colored surfaces, preferably completely white in a RAL-tone of 9016.
4. The wristwatch illumination unit of any of aspects 1-3, wherein the first angle is in the range of 40° to 85°, preferably 50° to 75°, and most preferably 60° to 65°.
5. The wristwatch illumination unit of any of aspects 1-4, wherein the second angle is in the range of 50° and 85°, preferably 60° to 80°, and most preferably 70° to 75°.
6. The wristwatch illumination unit of any of aspects 1-5, wherein the front wall of the illumination chamber further comprises a middle portion between the upper portion and the lower portion, the middle portion being positioned at a third angle relative to a vertical axis.
7. The wristwatch illumination unit of aspect 6, wherein the third angle is in the range of -20° to 20°, preferably in the range of -10° to 10°, and most preferably -5° to 5°.
8. The wristwatch illumination unit of any of aspects 1-7, further comprising a rear illumination panel proximate the rear wall of the chamber.
9. The wristwatch illumination unit of any of aspects 1-8, wherein the at least one light dispersive element forms at least one part of the at least one side wall of the chamber, the rear wall of the chamber, the bottom wall of the chamber and/or the top wall of the chamber.
10. The wristwatch illumination unit of any of aspects 1-9, wherein the at least one light dispersive element comprises opal polycarbonate plastic or opaque acrylic Perspex.
11. The wristwatch illumination unit of any of aspects 1-10, wherein the at least one light dispersive element is arranged between at least one of the top illumination panel, the bottom illumination panel and the rear illumination panel and the wristwatch holder.
12. The wristwatch illumination unit of any of aspects 1-11, wherein at least one, preferably each, of the top illumination panel, the bottom illumination panel and the rear illumination panel comprises a center portion and two side portions, the illumination of which can be controlled independently.
13. The wristwatch illumination unit of any of aspects 1-12, wherein the illumination chamber further comprises a blocking element arranged between at least one of the top illumination panel, the bottom illumination panel and the rear illumination panel and the wristwatch holder.
14. The wristwatch illumination unit of aspect 13, wherein the blocking element comprises neutral white PS or white Acrylic glass.
15. The wristwatch illumination unit of aspect 13 or aspect 14, wherein the blocking element comprises a first portion proximate to the top wall of the chamber, a second portion proximate to the bottom wall of the chamber, and optionally a third portion proximate to the rear wall of the chamber.
16. The wristwatch illumination unit of any of aspects 13-15, wherein the blocking element is arranged between at least one of the top illumination panel, the bottom illumination panel and the rear illumination panel and the wristwatch holder.
17. The wristwatch illumination unit of aspect 16, wherein the top and/or bottom illumination panels extend farther in a direction toward the side walls than the blocking element, wherein the blocking element is arranged between the top and/or bottom illumination panels, respectively.
18. The wristwatch illumination unit of any of aspects 1-17, wherein the wristwatch holder comprises an arch-shaped portion adapted for mounting a wristwatch such that the backside of the watchcase of the watch is, preferably fully, exposed.
19. The wristwatch illumination unit of aspect 18, wherein the lower portion of the front wall is positioned at a first angle relative to a vertical axis such that light emitted from the top illumination panel is reflected and/or scattered by said lower portion toward the arch-shaped portion of the wristwatch holder, and the upper portion of the front wall is positioned at a second angle relative to the vertical axis such that light emitted from the bottom illumination panel is reflected and/or scattered by said upper portion toward the arch-shaped portion of the wristwatch holder.
20. The wristwatch illumination unit of any of aspects 1-19, wherein the illumination unit further comprises a rotating unit configured to rotate around a first axis, the wristwatch holder being mounted on the rotating unit.
21. The wristwatch illumination unit of aspect 20, wherein the bottom wall of the chamber comprises a through-hole and wherein the wristwatch holder is mounted on the rotating unit by means of a shaft extending through the through-hole.
22. The wristwatch illumination unit of aspect 18 or aspect 19, wherein the wristwatch holder comprises a holding portion and the arch-shaped portion is rotatably mounted on the holding portion such that the arch-shaped portion can be rotated around a second axis being perpendicular to the first axis.
23. The wristwatch illumination unit of any of aspects 1-22, wherein the illumination unit further comprises a control unit for controlling the illumination provided by the illumination system and/or the rotation of the wristwatch holder.
24. The wristwatch illumination unit of any of aspects 1-23, wherein the illumination system provides illumination with a color temperature of at least 4000 K, preferably at least 4500 K, more preferably at least 5000 K.
25. The wristwatch illumination unit of any of aspects 1-24, wherein the illumination panels of the illumination system are positioned at least 20 mm away from the at least one light dispersive element.
26. The wristwatch illumination unit of any of aspects 1-25, wherein each illumination panel of the illumination system comprises multiple fields, each field comprising multiple light sources.
27. The wristwatch illumination unit of aspect 26, wherein the illumination provided by each field is individually controllable.
28. The wristwatch illumination unit of aspect 26 or aspect 27, wherein each panel comprises at least 8 fields, preferably at least 12 fields and/or at least 60 LEDs, preferably at least 72 LEDs.
29. The wristwatch illumination unit of any of aspects 1-28, wherein the top illumination panel extends farther in a direction toward the front wall than the bottom illumination panel by at least 10 mm, preferably by at least 20 mm, more preferably by at least 25 mm.
30. The wristwatch illumination unit of any of aspects 1-29, wherein the top wall extends farther in a direction toward the front wall than the bottom wall by at least 10 mm, preferably by at least 20 mm, more preferably by at least 25 mm.
31. The wristwatch illumination unit of any of aspects 29-30, wherein the illumination chamber further comprises a top blocking element arranged between the top illumination panel and the wristwatch holder and a bottom blocking element arranged between the bottom illumination panel and the wristwatch holder, wherein the top blocking element extends farther in a direction toward the front wall than the bottom blocking element by at least 5 mm, preferably by at least 10 mm, more preferably by at least 15 mm.
32. The wristwatch illumination unit of aspect 31, wherein the ratio between the unblocked area of the top illumination panel and the unblocked area of the bottom illumination panel is in the range of 1 to 2, preferably 1.1 to 1.5, more preferably 1.2 to 1.4.
33. Method for generating a multi-view picture of a wristwatch comprising the following steps:
   providing an illumination unit according to any of the preceding aspects,
   mounting a wristwatch on the wristwatch holder mounted on a rotating unit,
   rotating the rotating unit around a first axis,
   generating a series of pictures of the wristwatch mounted on the wristwatch holder by means of a camera unit, wherein the pictures of the series of pictures show the wristwatch at different angles with respect to the camera unit, and
   merging the pictures to a multi-view picture and/or movie of the wristwatch.

The subject matter of the invention will be explained in more detail in the following text with reference to preferred exemplary embodiments which are illustrated in the attached drawings, in which:
Fig. 1 schematically shows a wristwatch illumination unit according to an embodiment of the present invention;
Fig. 2 schematically shows a wristwatch illumination unit according to an embodiment of the present invention;
Fig. 3 schematically shows a wristwatch holder according to an embodiment of the present invention;
Fig. 4 schematically shows a wristwatch holder according to an embodiment of the present invention; and
Fig. 5 schematically shows a wristwatch holder according to an embodiment of the present invention.

In principle, identical parts are provided with the same reference signs in the figures.

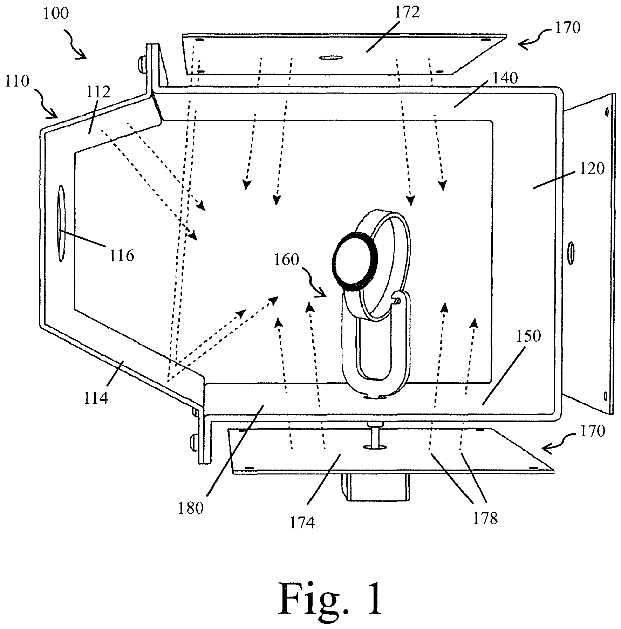

Fig. 1 schematically shows a wristwatch illumination unit 100 according to an embodiment of the present invention. The illumination unit 100 comprises a front wall 110, a rear wall 120, a top wall 140, and a bottom wall 150 which define an illumination chamber. Although the top and bottom walls 140, 150 are shown in this embodiment to have an orientation parallel to each other and the rear wall 120 is shown to have an orientation perpendicular to the top and bottom walls 140, 150, the top, bottom, and rear walls 140, 150, 120 may all have any orientation with regard to each other and the chamber. Moreover, the illumination unit 100 preferably comprises two side walls not shown in the figure.

The front wall 110 of the chamber is divided into three portions, an upper portion 112, a lower portion 114 and a middle portion 118, where the middle portion 118 is provided with an imaging through-hole 116. The imaging through-hole 116 is situated to allow for the viewing of the wristwatch when placed within the illumination unit 100, by a person, a camera, or some other imaging device. In this embodiment the through-hole 116 is placed in the center of the middle portion 118, however, the through-hole 116 can be placed anywhere within the middle portion 118 of the front wall 110. The size and shape of the through-hole 116 may assume any functional form, such as rectangular or ovoid. The structure of the through-hole 116 may optionally be determined by the requirements of the imaging setup. The through-hole 116 may, in some cases, be so large as to occupy the entire space of the middle portion 118, leaving essentially only the upper portion 112 and the lower portion 114 as constituting the front wall 110. The upper portion 112, lower portion 114 and middle portion 118 of the front wall 110 may be flat or planar. The portions of the front wall 110 may also be shaped like an infinity wall or multi-planar. While the front wall of the embodiment shown in Fig. 1 comprises three portions, the front wall may also comprise only two portions with the imaging through-hole extending into these two portions, or four or more portions.

Additionally, the illumination unit 100 comprises a wristwatch holder 160, which is mounted inside the illumination chamber. As shown in this embodiment the wristwatch holder 160 may be mounted essentially in the center of the bottom wall 150 of the chamber and may hold the watch at an elevation corresponding to substantially the center of the rear wall 120 of the chamber. The wristwatch holder 160 may be mounted such that the holder 160 is aligned with the through-hole 116 of the front wall 110.

The illumination unit 100 also comprises an illumination system 170 for providing illumination to the inside of the chamber and specifically the wristwatch and/or the wristwatch holder 160. The illumination system 170 includes a top illumination panel 172, a bottom illumination panel 174, and an optional rear illumination panel 176, which are placed proximate the top, bottom and rear walls 140, 150, 120 respectively. Each illumination panel 172, 174, 176 comprises at least one light source 178. The light sources 178 may comprise any suitable light source, such as, for example, incandescent light bulbs, fluorescent lamps, compact fluorescent lamps, cold cathode fluorescent lamps, high intensity discharge lamps, and/or preferably light emitting diodes (LEDs). The specific color temperature provided by any of these light sources 178 may also be specifically selected. A color temperature of at least 4000 K is preferable, preferably at least 4500 K, and even more preferably at least 5000 K.

The upper portion 112, lower portion 114 and the optional middle portion 118 of the front wall 110 are all angled so as to partially reflect and/or scatter light from the illumination system 170 back toward the center of the illumination chamber. As can be seen in Fig. 1, light rays (indicated by hatched arrows) emanating from the top illumination panel 172 may illuminate the top of the watch or may alternately reflect and/or scatter off the lower portion 114 of the front wall 110, thereby illuminating the watch from an oblique lower angle. Similarly, light from the bottom illumination panel 174 may illuminate the bottom of the watch or may alternately reflect and/or scatter off of the upper portion 112 of the front wall 110, thereby illuminating the watch from an oblique upper angle. This allows for a very homogenous illumination despite of the fact that, in some embodiments, only two planar illumination panels are provided. The tilted arrangement of the first and second portions, in particular, enables illumination of critical features such as the display of the watch while at the same time avoiding disturbing reflections (e.g. by the glass lid of the watch).

Each illumination panel 172, 174, 176 may be oriented parallel to the respective chamber wall 140, 150, 120. This placement allows the wristwatch holder 160 and the wristwatch to be illuminated from a variety of different angles. The illumination panels 172, 174, 176 may, as shown in Fig. 1, be smaller than the size of the chamber walls 120, 140, 150, or they may be of any size or even composed of multiple segments. All three illumination panels 172, 174, 176 in some embodiments are connected to a single power source and a single controller.

In some embodiments one or more of the illumination panels 172, 174, 176 comprise a center portion and two side portions. The illumination of each of these portions may be controlled independently so that the illumination provided to the wristwatch and/or wristwatch holder provides a higher level of specificity and control.

The wristwatch illumination unit 100 also comprises a light dispersive element 180. In the embodiment shown in Fig. 1, the chamber walls 140, 150, 120 serve as the light dispersive element 180 as they allow light emitted by the illumination system 170 to permeate therethrough and concurrently be dispersed within the chamber. In alternative embodiments, the light dispersive element 180 may be distinct from the chamber walls and positioned between the illumination system 170 and the wristwatch holder 160. The light dispersive element 180 may, in some embodiments, comprise opal polycarbonate plastic or opaque acrylic Perspex.

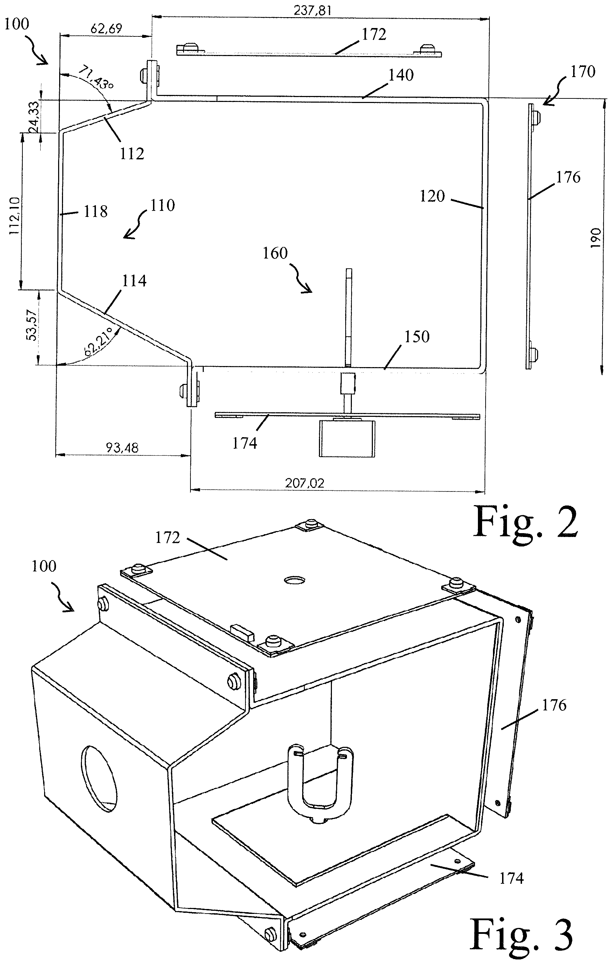

Fig. 2 schematically illustrates a specific embodiment of the wristwatch illumination system 170. As shown here, the top wall 140 and associated top illumination panel 172 may extend farther in the direction of the front wall 110 than the bottom wall 150 and the bottom illumination panel 174 by a distance of at least 10 mm, preferably by at least 20 mm, and even more preferably by a distance of at least 25 mm. When imaging a wristwatch mounted on the wristwatch holder 160, the wristwatch is preferably oriented so that the watch face is somewhat inclined toward the top wall 140 of the chamber. The overhanging portion of the top wall 140 and the top illumination panel 172 may then advantageously direct light toward the watch face and the watch dial.

In Fig. 2 the angles of the upper, lower, and middle front wall portions 112, 114, 118 are given as example angles. The first angle formed between the lower portion 114 and the vertical axis is configured such that light from the top illumination panel 172 is reflected and/or scattered off of the lower portion 114 toward the wristwatch holder 160. Specifically, the first angle may have a range of 40° to 85°, preferably 50° to 75°, and most preferably 60° to 65°, where in the present embodiment the first angle is given as 62.21°.

A second angle is formed between the upper portion 112 of the front wall 110 and the vertical axis. The second angle is configured such that light from the bottom illumination panel 174 is reflected and/or scattered off of the upper portion 112 toward the wristwatch holder 160. Specifically, the second angle may have a range of 50° and 85°, preferably 60° to 80°, and most preferably 70° to 75°, where in the present embodiment the second angle is given as 71.43°.

The middle portion 118 of the front wall 110 may be positioned at a third angle relative to the vertical axis such that light from the top, bottom, and rear illumination panels 172, 174, 176 is reflected and/or scattered off of the middle portion 118 toward the wristwatch holder 160. The third angle may be in the range of -20° to 20°, preferably in the range of -10° to 10°, and most preferably -5° to 5°, where in the present embodiment the middle portion 118 is aligned along the vertical axis, thus forming a third angle of 0°.

Each of the illumination panels 172, 174, 176 is separated a distance from the associated chamber wall 140, 150, 120. This distance may be at least 20 mm. The separation of the illumination panels 172, 174, 176 from the light dispersive element 180 helps ensure a soft light scattering from the illumination system 170. Specifically, the distance between the illumination panels and the dispersive element 180 also ensures that no LED-dots are visible on the walls of the chamber or transmitted onto the wristwatch holder.

Fig. 3 shows a schematic perspective view of the illumination chamber according to some embodiments. In this embodiment a rear illumination panel 176 is placed behind the rear wall 120 of the illumination chamber. The rear illumination panel 176 can be used to provide a blank, preferably white background for the wristwatch. The wristwatch holder 160 is shown here without the arch-shaped portion 162.

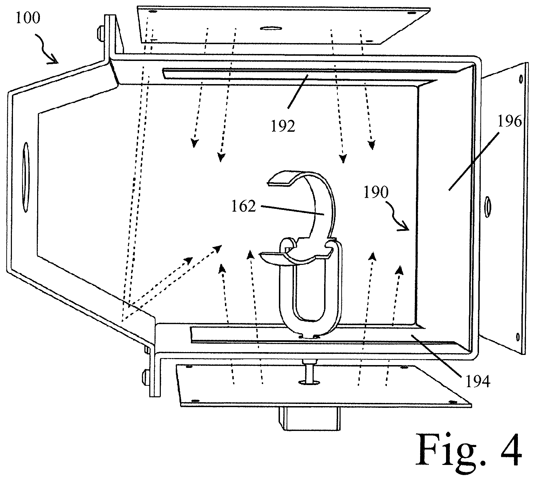

Fig. 4 shows another embodiment of the present invention. Here the wristwatch illumination unit 100 further comprises a blocking element 190. The blocking element 190 is placed in between the illumination system 170 and the wristwatch holder 160. The blocking element 190 serves to selectively block the light emitted from the illumination panels such that the wristwatch is selectively illuminated. The blocking element 190 may comprise neutral white PS or white Acrylic glass.

As shown in Fig. 4, the blocking element 190 comprises multiple different portions 192, 194, 196 arranged proximate the top, bottom and rear walls 140, 150, 120 of the illumination chamber, respectively. The blocking element 190 may selectively block light emitted from the illumination panel directly above, below, and behind the wristwatch holder 160 so the light arriving at the wristwatch and the wristwatch holder 160 comes from a more oblique side angle.

Numerous beneficial effects of the present wristwatch illumination unit 100 have been provided over systems of the prior art. Notable drawbacks of such prior art systems are the over exposure of the top and bottom of the watch band, poor illumination of the watchcase, watch dial and the bezel, and generally not enough light provided to the forward facing parts of the wristwatch. Other drawbacks include that the color of the watch materials may not be correctly represented.

In contrast, a wristwatch illuminated by wristwatch illumination unit 100 according to the present invention realizes many benefits. The watchcase, watch dial and bezel are specifically illuminated, the colors of the watch are faithfully represented, and the top and bottom of the watch band are not overexposed. Furthermore, the watchcase is shinier and exhibits distinct light spots in certain areas of the watch case. These light spots help to highlight the three dimensional qualities of the watch and draw attention to the fine details of the watch case.

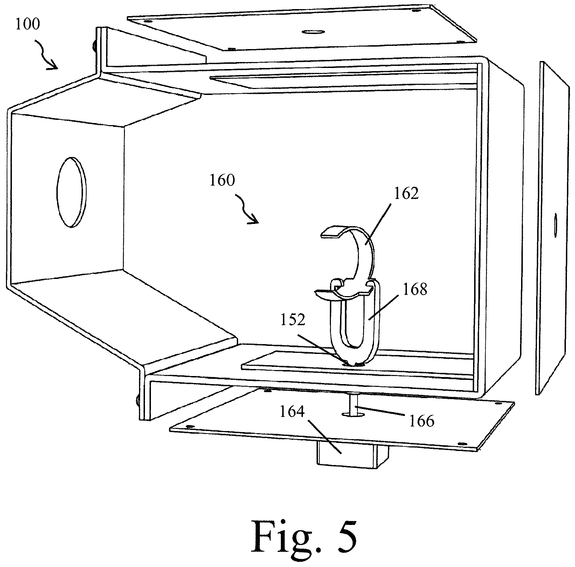

In Fig. 5 the mounting arrangement of the wristwatch holder 160 is depicted in more detail. In this embodiment the bottom wall 150 of the illumination chamber has a through-hole 152. Here the bottom illumination panel 174 also has a through-hole. The wristwatch holder 160 is mounted on shaft 166 extending through the through-hole 152, and the shaft 166 is mounted on a rotating unit 164. The wristwatch holder 160 comprises multiple pieces, including an arch-shaped portion 162 whereupon the wristwatch can be mounted. The arch-shaped portion 162 is formed so that the backside of the watchcase may be fully exposed. This allows the camera or viewer to view the backside of the watchcase, which may include fine details. Further, the arch-shaped portion 162 is mounted on a holding portion 168, whereby the holding portion is mounted on the shaft 166. The junction between the arch-shaped portion 162 and the holding portion 168 is a sliding junction so that ultimately the arch-shaped portion 162 with the wristwatch may be rotated about two independent axes. The first axis of rotation is defined by the shaft 166 being rotated by the rotating unit 164. The second axis of rotation is defined by the sliding rotation of the arch-shaped portion 162 relative to the holding portion 168. In some circumstances these two axes of rotation are perpendicular.

The optional controller may be provided for controlling the illumination provided by the illumination system 170 and/or the rotation of the wristwatch holder 160. The illumination panels may comprise multiple fields, each field comprising multiple light sources 178. Each of the fields of the illumination panels can be individually controllable by the control unit, such that each field may be turned on and off or dimmed independently of the other fields. Each panel may comprise at least 8 fields, preferably at least 12 fields and/or at least 60 LEDs, preferably at least 72 LEDs. The controller may retain sets of parameters for lighting configurations specific to different types of watches. A user may be able to select a certain parameter profile to effect the corresponding illumination of the watch.

Any of the embodiments of the present invention may be used to produce a multi-view picture of a wristwatch. A method for producing the multi-view picture includes providing the wristwatch illumination unit 100 according to any of the embodiments, then mounting a wristwatch on the wristwatch holder 160. The wristwatch holder 160 is mounted on a rotating unit 164, so that the wristwatch may be rotating around a first axis. During rotation a series of pictures of the wristwatch are generated using a camera unit. The pictures depict the wristwatch from a variety of different angles. Finally, the multi-view pictures may optionally be merged together to form a movie of the rotating wristwatch.

Different light settings may be used during the photography process. The light settings may be related to the angle of the wristwatch relative to the camera unit. The number of pictures taken may vary, in one embodiment the number of pictures taken is at least 48. It is possible to have different illumination settings for each watch and for each photo.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one".

## Claims

1. A wristwatch illumination unit comprising:
an illumination chamber comprising a front wall, a rear wall, at least one side wall, a top wall and a bottom wall;
a wristwatch holder mounted within the illumination chamber;
an illumination system comprising a top illumination panel proximate to the top wall of the chamber and a bottom illumination panel proximate to the bottom wall of the chamber, wherein each illumination panel comprises at least one light source; and
at least one light dispersive element;
wherein the front wall of the illumination chamber comprises an upper portion, a lower portion, and an imaging through-hole positioned between the upper portion and the lower portion, the lower portion being positioned at a first angle relative to a vertical axis such that light emitted from the top illumination panel is reflected and/or scattered by said lower portion toward the wristwatch holder, and the upper portion being positioned at a second angle relative to the vertical axis such that light emitted from the bottom illumination panel is reflected and/or scattered by said upper portion toward the wristwatch holder.

2. The wristwatch illumination unit of claim 1, wherein the first angle is in the range of 40° to 85°, preferably 50° to 75°, and most preferably 60° to 65°, and/or wherein the second angle is in the range of 50° and 85°, preferably 60° to 80°, and most preferably 70° to 75°.

3. The wristwatch illumination unit of claim 1 or claim 2, wherein the front wall of the illumination chamber further comprises a middle portion between the upper portion and the lower portion, the middle portion being positioned at a third angle relative to a vertical axis, preferably wherein the third angle is in the range of -20° to 20°, preferably in the range of -10° to 10°, and most preferably -5° to 5°.

4. The wristwatch illumination unit of any of claims 1-3, further comprising a rear illumination panel proximate the rear wall of the chamber.

5. The wristwatch illumination unit of claim 4, wherein at least one, preferably each, of the top illumination panel, the bottom illumination panel and the rear illumination panel comprises a center portion and two side portions, the illumination of which can be controlled independently.

6. The wristwatch illumination unit of claim 4 or claim 5, wherein the illumination chamber further comprises a blocking element arranged between at least one of the top illumination panel, the bottom illumination panel and the rear illumination panel and the wristwatch holder, preferably wherein the blocking element comprises neutral white PS or white Acrylic glass.

7. The wristwatch illumination unit of claim 6, wherein the blocking element comprises a first portion proximate to the top wall of the chamber, a second portion proximate to the bottom wall of the chamber, and optionally a third portion proximate to the rear wall of the chamber, preferably wherein the top and/or bottom illumination panels extend farther in a direction toward the side walls than the blocking element, wherein the blocking element is arranged between the top and/or bottom illumination panels, respectively.

8. The wristwatch illumination unit of any of claims 1-7, wherein the lower portion of the front wall is positioned at a first angle relative to a vertical axis such that light emitted from the top illumination panel is reflected and/or scattered by said lower portion toward the wristwatch holder, and the upper portion of the front wall is positioned at a second angle relative to the vertical axis such that light emitted from the bottom illumination panel is reflected and/or scattered by said upper portion toward the wristwatch holder.

9. The wristwatch illumination unit of any of claims 1-8, wherein the illumination unit further comprises a rotating unit configured to rotate around a first axis, the wristwatch holder being mounted on the rotating unit, preferably wherein the illumination unit further comprises a control unit for controlling the illumination provided by the illumination system and/or the rotation of the wristwatch holder.

10. The wristwatch illumination unit of any of claims 1-9, wherein the illumination panels of the illumination system are positioned at least 20 mm away from the at least one light dispersive element.

11. The wristwatch illumination unit of any of claims 1-10, wherein each illumination panel of the illumination system comprises multiple fields, each field comprising multiple light sources, preferably wherein the illumination provided by each field is individually controllable.

12. The wristwatch illumination unit of any of claims 1-11, wherein the top illumination panel extends farther in a direction toward the front wall than the bottom illumination panel by at least 10 mm, preferably by at least 20 mm, more preferably by at least 25 mm, and/or wherein the top wall extends farther in a direction toward the front wall than the bottom wall by at least 10 mm, preferably by at least 20 mm, more preferably by at least 25 mm.

13. The wristwatch illumination unit of any of claims 1-12, wherein the illumination chamber further comprises a top blocking element arranged between the top illumination panel and the wristwatch holder and a bottom blocking element arranged between the bottom illumination panel and the wristwatch holder, wherein the top blocking element extends farther in a direction toward the front wall than the bottom blocking element by at least 5 mm, preferably by at least 10 mm, more preferably by at least 15 mm.

14. The wristwatch illumination unit of claim 13, wherein the ratio between the unblocked area of the top illumination panel and the unblocked area of the bottom illumination panel is in the range of 1 to 2, preferably 1.1 to 1.5, more preferably 1.2 to 1.4.

15. Method for generating a multi-view picture of a wristwatch comprising the following steps:
providing an illumination unit according to any of the preceding claims,
mounting a wristwatch on the wristwatch holder mounted on a rotating unit,
rotating the rotating unit around a first axis,
generating a series of pictures of the wristwatch mounted on the wristwatch holder by means of a camera unit, wherein the pictures of the series of pictures show the wristwatch at different angles with respect to the camera unit, and
merging the pictures to a multi-view picture and/or movie of the wristwatch.
